# EUROPÄISCHE PATENTSCHRIFT

(11) **EP 2 222 533 B1**
(45) Veröffentlichungstag und Bekanntmachung des Hinweises auf die Patenterteilung: **17.07.2013**
(21) Anmeldenummer: 08851887.3
(22) Anmeldetag: 05.11.2008
(51) Int. Cl.: B62D 15/02

(54) **VERFAHREN UND VORRICHTUNG ZUR BAHNPLANUNG BEIM EINPARKEN EINES FAHRZEUGS**
METHOD AND DEVICE FOR PLANNING A PATH WHEN PARKING A VEHICLE
PROCÉDÉ ET DISPOSITIF DE PLANIFICATION DE TRAJECTOIRE LORS DE MANOEUVRES DE GARAGE D'UN VÉHICULE

(30) Priorität: 20.11.2007 DE 102007055390
(43) Veröffentlichungstag der Anmeldung: 01.09.2010
(73) Patentinhaber: Valeo Schalter und Sensoren GmbH, 74321 Bietigheim-Bissingen (DE)
(72) Erfinder: BARTH, Harald, 70825 Korntal-Münchingen (DE); JECKER, Nicolas, 74728 Esslingen (DE)
(86) Internationale Anmeldenummer: PCT/EP2008/009297
(87) Internationale Veröffentlichungsnummer: WO 2009/065493

(56) Entgegenhaltungen:
- EP-A- 1 602 530
- WO-A-2005/118339
- WO-A-2008/104488

## Beschreibung

### Stand der Technik

Die Erfindung betrifft ein Verfahren zur Bahnplanung beim Einparken eines Fahrzeugs gemäß dem Oberbegriff des Anspruchs 1, eine Fahrerassistenzvorrichtung und ein Computerprogramm zur Durchführung des Verfahrens.

Bekannte Fahrassistenzvorrichtungen zur Unterstützung eines Fahrers eines Fahrzeugs beim Einparken in eine seitliche Parklücke, im Folgenden kurz als Einparksysteme bezeichnet, berechnen zu Beginn bzw. vor Beginn eines Einparkvorgangs eine Bahn für das Einparken des Fahrzeugs, bzw. eine Einparkbahn. Diese Bahn wird anhand der Geometrie einer Parklücke und einer Fahrzeugposition relativ zu dieser Parklücke berechnet. Weitere Eingangsgrößen werden dabei nicht berücksichtigt. Dies führt nachteilig dazu, dass bei zu wenig Freiraum auf der der Parklücke gegenüberliegenden Seite, beispielsweise in einer engen Strasse, eine Bahn berechnet wird, die aufgrund fehlenden Raumes nicht vollständig abgefahren werden kann, beispielsweise aufgrund des seitlichen Ausscherens des Fahrzeugs beim Rückwärtseinparken, und der Einparkvorgang abgebrochen werden muss.

Durch die WO 2005/118339 A1 ist ein gattungsgemäßes Verfahren zur Bahnplanung beim Einparken eines Fahrzeugs in eine seitliche Parklücke bekannt, bei dem eine Überwachung der der Parklücke gegenüber liegenden Seite während der Vermessung der Parklücke und während des Einparkvorgangs vorgesehen ist. Dabei wird der Abstand zu Hindernissen auf der der Parklücke gegenüber liegenden Seite erfasst und bei der Bahnplanung berücksichtigt.

Ferner ist aus der EP 1 602 530 A1 ein gattungsgemäßes Verfahren zur Bahnplanung beim Einparken eines Fahrzeugs bekannt, bei dem die Parkposition des Fahrzeugs unter Berücksichtigung der Abstände von Objekten ermittelt wird, die vor oder nach dem Passieren der Parklücke von einer Sensoranordnung des Fahrzeugs erfasst wurden. Dabei wird vorgeschlagen zusätzlich zu den die Parklücke begrenzenden Objekten auch die Abstände zu Objekten auf einer der Parklücke gegenüber liegenden Seite zu berücksichtigen.

In dem nachveröffentlichten Dokument WO 2008/104488 A1 ist ein Verfahren zur Bahnplanung beim Einparken eines Fahrzeugs bekannt, bei dem anhand von Lagepunkten im Bereich des Parkplatzes ein Lagefeld ermittelt und die Parkposition des Fahrzeugs anhand der Orientierung des Lagefeldes festgelegt wird. Beim Einparken des Fahrzeugs kann ein auf der Gegenseite des Fahrzeugs vorhandener Freiraum berücksichtigt werden.

### Offenbarung der Erfindung

Die Erfindung geht von einem Verfahren zur Bahnplanung beim Einparken eines Fahrzeugs aus, bei dem das Einparken eines Fahrzeugs in eine seitliche Parklücke verbessert und zusätzliche Eingangsgrößen berücksichtigt werden sollen, um die Einparkbahn der Situation noch besser anpassen zu können und insbesondere bei der Bahnplanung Hindernisse vor allem auf der der Parklücke gegenüber liegenden Seite berücksichtigen zu können.

Die Nachteile des Standes der Technik werden bei einem erfindungsgemäßen Verfahren zur Bahnplanung beim Einparken eines Fahrzeugs in eine seitliche Parklücke in vorteilhafter Weise dadurch vermieden, dass bei der Berücksichtigung des auf der der Parklücke gegenüberliegenden Seite verfügbaren Raumes bzw. Platzes der kürzeste Abstand quer zur Längsrichtung berücksichtigt wird, wobei zwischen zwei Bahnabschnitten unterschieden wird, einem ersten Bahnabschnitt außerhalb eines Ausscher- oder Schwenkbereichs des Fahrzeugs bei einem Abfahren der berechneten Bahn und einem zweiten Bahnabschnitt innerhalb eines Ausscher- oder Schwenkbereichs des Fahrzeugs bei einem Abfahren der berechneten Bahn.

Die Erfindung erlaubt eine Anpassung der Bahn für das Einparken eines Fahrzeugs in eine Parklücke unter Berücksichtigung des der Parklücke gegenüberliegenden Freiraums. Vorteile der Erfindung gegenüber dem Stand der Technik ergeben sich insbesondere daraus, dass Hindernisse auf der der Parklücke gegenüber liegenden Seite erfasst und bei der Bahnplanung berücksichtigt werden.

Eine vorteilhafte Ausgestaltung des erfindungsgemäßen Verfahrens sieht vor, dass zusätzlich zu einer Vermessung der Parklücke auf einer ersten Seite des Fahrzeugs gleichzeitig eine Vermessung des verfügbaren Raums auf einer der Parklücke gegenüberliegenden zweiten Seite des Fahrzeugs erfolgt, der dann bei der Berechnung der Bahn berücksichtigt wird.

Vorzugsweise umfasst die Bahn einen ersten und einen zweiten Bahnbogen, wobei der Radius bzw. die Größe des ersten Bahnbogens derart gewählt wird, dass der auf der der Parklücke gegenüberliegenden Seite verfügbare Raum bzw. Platz mindestens einem unmittelbar von der Größe des ersten Bahnbogens abhängigen seitlichen Ausscheren des Fahrzeugs genügt.

Die Größe des ersten Bahnbogens bestimmt direkt die Größe des seitlichen Ausscherens des Fahrzeugs beim Abfahren der Bahn während des Einparkvorgangs. Durch Anpassung des ersten Bahnbogens an den verfügbaren Raum bzw. Platz wird erreicht, dass die Bahn beim Einparkvorgang vollständig abgefahren werden kann. Dadurch wird ein Abbruch des Einparkvorgangs wegen unzureichenden Raumes vermieden.

Der auf der der Parklücke gegenüberliegenden Seite verfügbare Raum bzw. Platz wird vorzugsweise bei der Bahnplanung bzw. bei der Berechnung der Bahn berücksichtigt, indem eine Bahn mit einem ersten Bahnbogen berechnet wird und anschließend der von dem Fahrzeug bei einem Abfahren der Bahn benötigte Raum mit dem verfügbaren Raum verglichen wird, wobei wenn der verfügbare Raum größer oder gleich dem benötigten Raum ist, die Bahn unverändert bleibt, und wenn der verfügbare Raum kleiner als der benötigte Raum ist, die Größe des ersten Bahnbogens so lange vorzugsweise iterativ vergrößert wird, bis der benötigte Raum gleich oder kleiner dem verfügbaren Raum ist.

Ebenso ist denkbar, dass der auf der der Parklücke gegenüberliegenden Seite verfügbare Raum bzw. Platz bei der Bahnplanung bzw. bei der Berechnung der Bahn berücksichtigt wird, indem eine Berechnung direkt mit einem zu dem verfügbaren Raum passenden ersten Bahnbogen erfolgt.

Zur Kontrolle, ob die berechnete Bahn tatsächlich mit dem verfügbaren Raum auskommt, kann dabei nach der Berechnung der Bahn ein Vergleich des von dem Fahrzeug bei einem Abfahren der Bahn benötigten Raumes mit dem verfügbaren Raum erfolgen, wobei wenn der verfügbare Raum kleiner als der benötigte Raum ist, eine Korrektur der Bahn durchgeführt wird.

Eine andere vorteilhafte Ausgestaltung des erfindungsgemäßen Verfahrens sieht vor, dass in Abhängigkeit von der Vergrößerung des ersten Bahnbogens die gesamte Bahn in Längsrichtung aus Fahrtrichtung des Fahrzeugs gesehen nach rückwärts verschoben wird. Durch eine Vergrößerung des ersten Bahnbogens wird eine Startposition für einen Einparkvorgang in Längsrichtung von der Parklücke weg verschoben. Es kann daher vorteilhaft sein, wenn in Abhängigkeit von der Vergrößerung des ersten Bahnbogens die gesamte Bahn in Längsrichtung aus der Fahrtrichtung des Fahrzeugs gesehen nach rückwärts verschoben wird, um das Verschieben der Startposition in Längsrichtung von der Parklücke weg ganz oder teilweise zu kompensieren.

Da dies dazu führt, dass beim Einparken Platz am Anfang der Parklücke verschenkt wird, kann diese Funktion von der vorhandenen Geometrie der Parklücke, insbesondere von deren Länge abhängig gemacht werden. Bei kurzen Parklücken erfolgt vorzugsweise keine oder nur eine geringe Kompensation, wohingegen bei langen Parklücken eine stärkere oder vollständige Kompensation erfolgt.

Vorzugsweise wird bei einer Ermittlung des verfügbaren Raumes der tatsächlich verfügbare Raum um einen voreinstellbaren Wert verringert. Dies kann insbesondere dazu dienen, den Abstand zu Objekten und Hindernissen während des Einparkvorgangs nicht unter eine Minimalschwelle geraten zu lassen. Dadurch wird erreicht, dass der Fahrer des Fahrzeugs dem Verfahren zu jedem Zeitpunkt vertrauen kann, da er meist den betroffenen Bereich nicht einsehen und dadurch nur schwer einschätzen kann. Insbesondere wenn eine Abstandssensorik, beispielsweise in Form von Ultraschallsensoren, vorhanden ist, welche beispielsweise einen akustischen Wam- oder Annäherungston ausgibt, wird die Minimalschwelle vorzugsweise so festgelegt, dass der Abstand zu keinem Zeitpunkt dazu führt, dass der Fahrer mit einer sogenannten Dauerton-Warnung irritiert oder abgelenkt oder verunsichert wird.

Eine zusätzliche vorteilhafte Ausgestaltung des erfindungsgemäßen Verfahrens sieht vor, dass wenn der verfügbare Raum zu gering für einen Einparkvorgang ist, die Parklücke nicht zum Einparken angeboten wird. Ist der verfügbare Raum so gering, dass eine Einparkbahn nicht mehr möglich bzw. nicht mehr sinnvoll ist, beispielsweise weil eine Startposition für den Einparkvorgang zu weit von der Parklücke entfernt läge, wird dem Fahrer des Fahrzeugs die Parklücke nicht mehr zum Einparken angeboten.

Dabei ist denkbar, dass dem Fahrer der Grund für das Nichtanbieten der Parklücke angezeigt wird.

Darüber hinaus ist denkbar, bei der Berücksichtigung des auf der der Parklücke gegenüberliegenden Seite verfügbaren Raumes bzw. Platzes den kürzesten Abstand zwischen einer Grenzlinie des Fahrzeugs bei einem Abfahren der berechneten Bahn und einem Objekt oder Hindernis zu berücksichtigen, wobei der tatsächlich auftretende kürzeste Abstand zwischen Fahrzeug und Objekt in Form einer Hüllkurve um die Grenzlinie betrachtet wird.

Die Erfindung ist insbesondere in Verbindung mit einer Fahrassistenzvorrichtung zur Unterstützung eines Fahrers eines Fahrzeuges beim Einparken in eine Parklücke vorteilhaft anwendbar. Eine solche Fahrassistenzvorrichtung umfasst vorzugsweise Mittel zur Erfassung einer Parklücke und eines auf einer der Parklücke gegenüberliegenden Seite des Fahrzeugs verfügbaren Raumes bzw. Platzes, sowie einen mit den Mitteln verbundenen Mikroprozessor mit zugehörigen Speichermitteln zur Berechnung einer beispielsweise einen ersten und einen zweiten Bahnbogen umfassenden, den auf der der Parklücke gegenüberliegenden Seite verfügbaren Raum bzw. Platz berücksichtigenden Bahn.

Eine vorteilhafte Anwendung des erfindungsgemäßen Verfahrens ergibt sich in Verbindung mit einer Fahrassistenzvorrichtung, welche ein geführtes Einparken oder ein halbautomatisches Einparken, oder ein vollautomatisches Einparken ermöglicht.

Eine besonders vorteilhaften Ausgestaltung der Erfindung betrifft ein Computerprogrammprodukt gespeichert auf einem computerverwendbaren Medium, umfassend computerlesbare Programmittel, welche bei Ausführung des Computerprogrammprodukts auf einem Mikroprozessor mit zugehörigen Speichermitteln oder auf einem Computer diesen zur Durchführung eines oben beschriebenen, erfindungsgemäßen Verfahrens veranlassen.

### Kurze Beschreibung der Zeichnung

Die Erfindung wird nachfolgend anhand der Figuren der Zeichnungen erläutert. Dabei zeigen:
- Figur 1: eine schematische Darstellung eines einzügigen Einparkvorgangs in eine seitliche Parklücke,
- Figur 2: eine schematische Darstellung eines ersten Ausführungsbeispiels eines einzügigen Einparkvorgangs in eine seitliche Parklücke unter Berücksichtigung des auf einer der Parklücke gegenüberliegenden Seite des Fahrzeugs verfügbaren Raumes,
- Figur 3: eine schematische Darstellung eines zweiten Ausführungsbeispiels eines einzügigen Einparkvorgangs in eine seitliche Parklücke unter Berücksichtigung des auf einer der Parklücke gegenüberliegenden Seite des Fahrzeugs verfügbaren Raumes und
- Figur 4: eine schematische Darstellung eines dritten Ausführungsbeispiels eines einzügigen Einparkvorgangs in eine seitliche Parklücke unter Berücksichtigung des auf einer der Parklücke gegenüberliegenden Seite des Fahrzeugs verfügbaren Raumes.

### Wege zur Ausführung der Erfindung

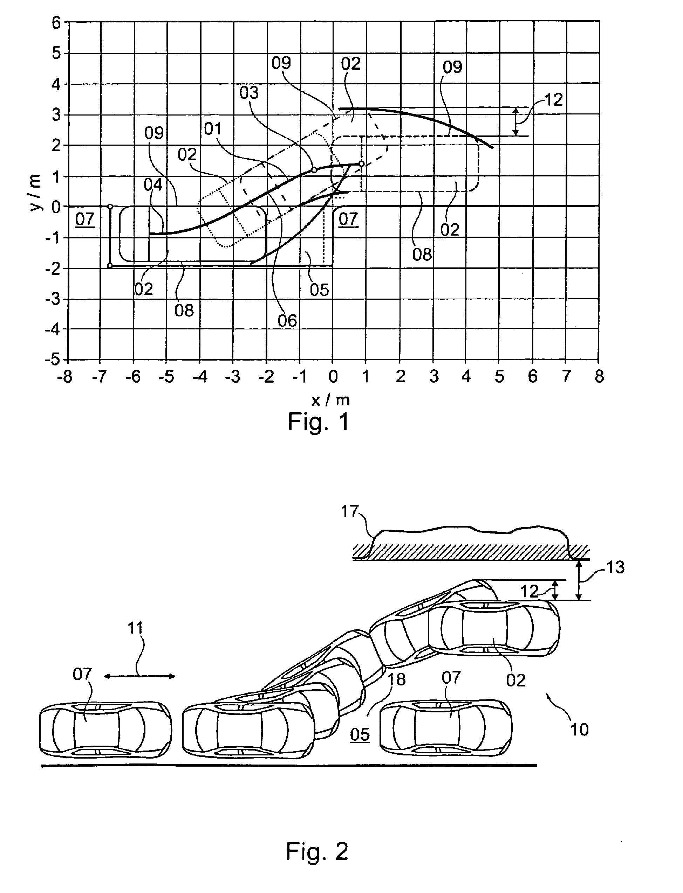

Eine in Figur 1 dargestellte Bahn 01 für das Einparken eines Fahrzeugs 02 in eine seitliche Parklücke 05 setzt sich bei einem dargestellten einzügigen Einparkvorgang beispielhaft aus einem ersten Bahnbogen 03, einem zweiten Bahnbogen 04 und einem dazwischen liegenden, auch als gerade Schrägphase bezeichneten geraden Abschnitt 06 zusammen. Die seitliche Parklücke 05 wird beispielsweise durch am Straßenrand geparkte, nicht näher dargestellte, Fahrzeuge 07 begrenzt. Der seitliche Abstand zwischen dem parkenden Fahrzeug 02 und den geparkten Fahrzeugen 07 beträgt im Ausführungsbeispiel 0,5 m.

Beispielsweise unterhalb eines vorgebbaren Schwellenwerts für die Fahrzeuggeschwindigkeit erfasst eine das erfindungsgemäße Verfahren durchführende, über geeignete Mittel zur Ausführung des Verfahrens verfügende im Fahrzeug 02 verbaute Fahrassistenzvorrichtung durch geeignete Umgebungssensoren, beispielsweise Ultraschallsensoren an der Fahrzeugfront, am Fahrzeugheck und gegebenenfalls an beiden Seiten des Fahrzeugs 02, eine auf einer ersten Seite 08 des Fahrzeugs 02, hier der rechten Seite 08, liegende Parklücke 05, sowie einen auf einer der Parklücke 05 gegenüberliegenden Seite 09 des Fahrzeugs 02, hier der linken Seite 09, verfügbaren Raum 13, 14, 15 (Fig. 2, 3 und 4) und berechnet eine Bahn 01 für das Einparken des Fahrzeugs 02 in die seitliche Parklücke 05, wobei bei der Bahnplanung bzw. Berechnung der Bahn 01 der verfügbare Raum 13, 14, 15 berücksichtigt wird. Hierdurch erfolgt eine Anpassung der Bahn 01 für das Einparken des Fahrzeugs 02 in die Parklücke 05 unter Berücksichtigung des der Parklücke 05 gegenüberliegenden Freiraums 13, 14, 15 insbesondere beispielsweise unter Berücksichtigung von Hindernissen und Objekten 17 auf der der Parklücke 05 gegenüber liegenden Seite 09.

Der Radius bzw. die Größe des ersten Bahnbogens 03 wird dabei vorzugsweise derart gewählt, dass der auf der der Parklücke 05 gegenüberliegenden Seite 09 verfügbare Raum 13, 14, 15 bzw. Platz mindestens einem unmittelbar von der Größe des ersten Bahnbogens 03 abhängigen seitlichen Ausscheren 12 des Fahrzeugs 02 genügt. Dieses seitliche Ausscheren 12 stimmt mit einem Schwenkbereich 12 überein, der im Wesentlichen dem für das Einparken benötigten Raum 12 auf der der Parklücke 05 gegenüberliegenden Seite 09 des Fahrzeugs 02 entspricht. Die Größe des ersten Bahnbogens 03 bestimmt direkt die Größe des seitlichen Ausscherens 12 des Fahrzeugs 02 beim Abfahren der Bahn 01 während des Einparkvorgangs. Durch Anpassung des ersten Bahnbogens 03 an den verfügbaren Raum 13, 14, 15 bzw. Platz wird erreicht, dass die Bahn 01 beim Einparkvorgang vollständig abgefahren werden kann.

Der auf der der Parklücke 05 gegenüberliegenden Seite 09 verfügbare Raum 13, 14, 15 wird bei der Bahnplanung bzw. bei der Berechnung der Bahn 01 vorzugsweise berücksichtigt, indem eine Bahn 01 mit einem ersten Bahnbogen 03 berechnet wird und anschließend der von dem Fahrzeug 02 bei einem Abfahren der Bahn 01 benötigte Raum 12 mit dem verfügbaren Raum 13, 14, 15 verglichen wird, wobei wenn der verfügbare Raum 13, 14, 15 größer oder gleich dem benötigten Raum 12 ist, die Bahn 01 unverändert bleibt, und wenn der verfügbare Raum 13, 14, 15 kleiner als der benötigte Raum 12 ist, die Größe des ersten Bahnbogens 03 so lange vorzugsweise iterativ vergrößert wird, bis der benötigte Raum 12 gleich oder kleiner dem verfügbaren Raum 13, 14, 15 ist.

Der auf der der Parklücke 05 gegenüberliegenden Seite verfügbare Raum 13, 14, 15 kann bei der Bahnplanung bzw. bei der Berechnung der Bahn 01 auch dadurch berücksichtigt werden, indem eine Berechnung der Bahn 01 direkt mit einem zu dem verfügbaren Raum 13, 14, 15 passenden ersten Bahnbogen 03 erfolgt. Zur Kontrolle, ob die berechnete Bahn tatsächlich mit dem verfügbaren Raum 13, 14, 15 auskommt, kann dabei nach der Berechnung der Bahn 01 ein Vergleich des von dem Fahrzeug 02 bei einem Abfahren der Bahn 01 benötigten Raumes 12 mit dem verfügbaren Raum 13, 14, 15 durchgeführt werden. Wenn der verfügbare Raum 13, 14, 15 kleiner als der benötigte Raum 12 ist, wird eine Korrektur der Bahn 01 durchgeführt.

In Abhängigkeit von der Vergrößerung des ersten Bahnbogens 03 kann außerdem die gesamte Bahn 01 in Längsrichtung 11 aus Fahrtrichtung des Fahrzeugs 02 gesehen nach rückwärts verschoben werden. Durch eine Vergrößerung des ersten Bahnbogens 03 wird eine Startposition 10 für einen Einparkvorgang in Längsrichtung 11 von der Parklücke 05 weg verschoben. Es kann daher vorteilhaft sein, wenn in Abhängigkeit von der Vergrößerung des ersten Bahnbogens 03 die gesamte Bahn 01 in Längsrichtung 11 aus der Fahrtrichtung des Fahrzeugs 02 gesehen nach rückwärts verschoben wird, um das Verschieben der Startposition 10 in Längsrichtung von der Parklücke 05 weg ganz oder teilweise zu kompensieren. Da dies dazu führt, dass beim Einparken Platz am Anfang 18 der Parklücke 05 verschenkt wird, kann diese Funktion von der vorhandenen Geometrie der Parklücke 05, insbesondere von deren Länge abhängig gemacht werden. Bei kurzen Parklücken 05 erfolgt vorzugsweise keine oder nur eine geringe Kompensation, wohingegen bei langen Parklücken 05 eine stärkere oder vollständige Kompensation erfolgt.

Bei der Berücksichtigung des auf der der Parklücke 05 gegenüberliegenden Seite 09 verfügbaren Raumes 13 kann, wie in Figur 2 dargestellt, der kürzeste Abstand 13 quer zur Längsrichtung 11 berücksichtigt werden, unabhängig von dessen Lage innerhalb eines relevanten Bahnabschnitts bzw. Abschnitts der Bahn 01.

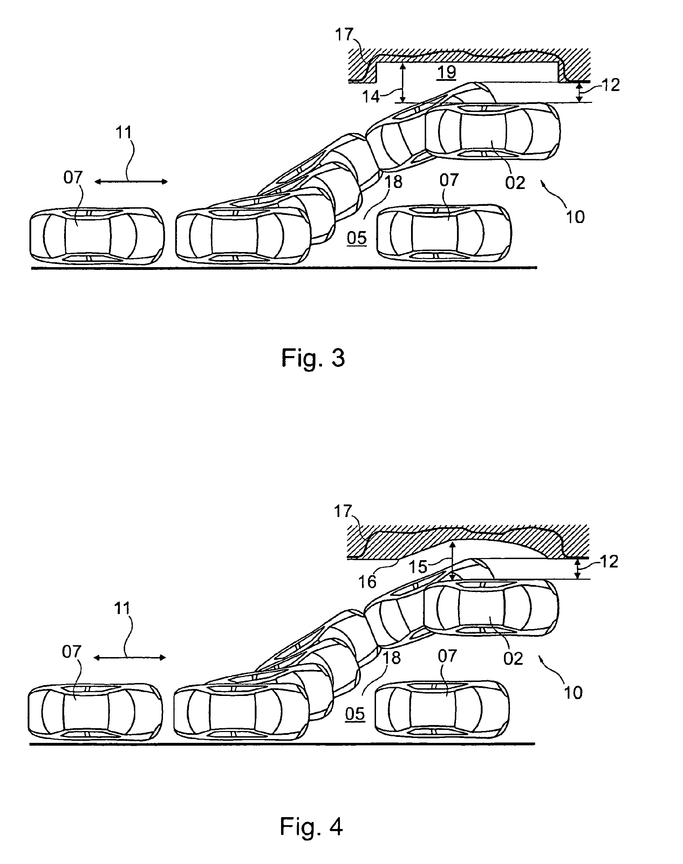

Ebenso kann, wie in Figur 3 dargestellt, bei der Berücksichtigung des auf der der Parklücke 05 gegenüberliegenden Seite 09 verfügbaren Raumes 14 der kürzeste Abstand 14 quer zur Längsrichtung 11 berücksichtigt werden, wobei zwischen zwei Bahnabschnitten unterschieden wird, einem ersten Bahnabschnitt außerhalb eines Ausscher- oder Schwenkbereichs 12 des Fahrzeugs 02 bei einem Abfahren der berechneten Bahn 01 und einem zweiten Bahnabschnitt 19 innerhalb eines Ausscher- oder Schwenkbereichs 12 des Fahrzeugs 02 bei einem Abfahren der berechneten Bahn 01.

Außerdem kann, wie in Figur 4 dargestellt, bei der Berücksichtigung des auf der der Parklücke 05 gegenüberliegenden Seite 09 verfügbaren Raumes 15 der kürzesten Abstand zwischen einer Grenzlinie 16 des Fahrzeugs 02 bei einem Abfahren der berechneten Bahn 01 und einem Objekt 17 oder Hindernis 17 berücksichtigt werden, wobei der tatsächlich auftretende kürzeste Abstand zwischen Fahrzeug 02 und Objekt 17 in Form einer Hüllkurve um die Grenzlinie 16 betrachtet wird.

Eine vorteilhafte Anwendung des erfindungsgemäßen Verfahrens ergibt sich in Verbindung mit einer Fahrassistenzvorrichtung, welche ein geführtes Einparken oder ein halbautomatisches Einparken, oder ein vollautomatisches Einparken ermöglicht.

## Patentansprüche

1. Verfahren zur Bahnplanung beim Einparken eines Fahrzeugs (02) in eine seitliche Parklücke (05), bei dem eine Bahn (01) anhand der Geometrie der Parklücke (05) und einer Fahrzeugposition relativ zu dieser Parklücke (05) berechnet wird, wobei ein auf einer der Parklücke (05) gegenüberliegenden Seite (09) verfügbarer Raum (13; 14; 15) bei der Bahnplanung berücksichtigt wird, **dadurch gekennzeichnet, dass** bei der Berücksichtigung des auf der der Parklücke (05) gegenüberliegenden Seite verfügbaren Raumes (14) bei der Bahnplanung der kürzeste Abstand (14) quer zur Längsrichtung (11) berücksichtigt wird, wobei zwischen zwei Bahnabschnitten unterschieden wird, einem ersten Bahnabschnitt außerhalb eines Schwenkbereichs (12) des Fahrzeugs (02) bei einem Abfahren der berechneten Bahn (01) und einem zweiten Bahnabschnitt (19) innerhalb eines Schwenkbereichs (12) des Fahrzeugs (02) bei einem Abfahren der berechneten Bahn (01).

2. Verfahren nach Anspruch 1, **dadurch gekennzeichnet, dass** zusätzlich zu einer Vermessung der Parklücke (05) auf einer ersten Seite (08) des Fahrzeugs (02) gleichzeitig eine Vermessung des verfügbaren Raums (13; 14; 15) auf einer der Parklücke (05) gegenüberliegenden zweiten Seite (09) des Fahrzeugs (02) erfolgt, der bei der Berechnung der Bahn (01) berücksichtigt wird.

3. Verfahren nach Anspruch 1 oder 2, **dadurch gekennzeichnet, dass** die Bahn (01) einen ersten und einen zweiten Bahnbogen (03; 04) umfasst, wobei die Größe des ersten Bahnbogens (03) derart gewählt wird, dass der auf der der Parklücke (05) gegenüberliegenden Seite verfügbare Raum (13; 14; 15) mindestens einem seitlichen Ausscheren (12) des Fahrzeugs (02) genügt.

4. Verfahren nach Anspruch 3, **dadurch gekennzeichnet, dass** der auf der der Parklücke (05) gegenüberliegenden Seite (09) verfügbare Raum (13; 14; 15) bei der Bahnplanung berücksichtigt wird, indem die Bahn (01) mit einem ersten Bahnbogen (03) berechnet wird und anschließend der von dem Fahrzeug (02) bei einem Abfahren der Bahn (01) benötigte Raum (12) mit dem verfügbaren Raum (13; 14; 15) verglichen wird, wobei wenn der verfügbare Raum (13; 14; 15) größer oder gleich dem benötigten Raum (12) ist, die Bahn (01) unverändert bleibt, und wenn der verfügbare Raum (13; 14; 15) kleiner als der benötigte Raum (12) ist, die Größe des ersten Bahnbogens (03) so lange vergrößert wird, bis der benötigte Raum (12) gleich oder kleiner dem verfügbaren Raum (13; 14; 15) ist.

5. Verfahren nach einem der Ansprüche 3 bis 4, **dadurch gekennzeichnet, dass** in Abhängigkeit von der Vergrößerung des ersten Bahnbogens (03) die gesamte Bahn (01) in Längsrichtung aus Fahrtrichtung des Fahrzeugs (02) gesehen nach rückwärts verschoben wird.

6. Verfahren nach Anspruch 5, **dadurch gekennzeichnet, dass** ein Verschieben der Bahn (01) nach rückwärts von der vorhandenen Geometrie der Parklücke (05), insbesondere von deren Länge abhängig ist, wobei bei einer kurzen Parklücke (05) keine oder nur eine geringe Verschiebung erfolgt, und bei einer langen Parklücke (05) eine größere Verschiebung erfolgt.

7. Verfahren nach Anspruch 2, **dadurch gekennzeichnet, dass** bei einer Ermittlung des verfügbaren Raumes (13; 14; 15) der tatsächlich verfügbare Raum (13; 14; 15) um einen voreinstellbaren Wert verringert wird.

8. Verfahren nach einem der vorhergehenden Ansprüche, **dadurch gekennzeichnet, dass** wenn der verfügbare Raum (13; 14; 15) zu gering für einen Einparkvorgang ist, die Parklücke (05) nicht zum Einparken angeboten wird.

9. Verfahren nach Anspruch 8, **dadurch gekennzeichnet, dass** dem Fahrer der Grund für das Nichtanbieten der Parklücke (05) angezeigt wird.

10. Verfahren nach einem der Ansprüche 1 bis 9, **dadurch gekennzeichnet, dass** bei der Berücksichtigung des verfügbaren Raumes (15) der kürzeste Abstand zwischen einer Grenzlinie (16) des Fahrzeugs (02) bei einem Abfahren der berechneten Bahn (01) und einem Objekt (17) berücksichtigt wird, wobei der tatsächlich auftretende kürzeste Abstand zwischen Fahrzeug (02) und Objekt (17) in Form einer Hüllkurve um die Grenzlinie (16) betrachtet wird.

11. Computerprogrammprodukt gespeichert auf einem computerverwendbaren Medium, umfassend computerlesbare Programmittel, welche bei Ausführung des Computerprogrammprodukts auf einem Mikroprozessor mit zugehörigen Speichermitteln oder auf einem Computer diesen zur Durchführung eines Verfahrens nach einem der Ansprüche 1 bis 10 veranlassen.

## Claims

1. Method for planning a path when parking a vehicle (02) in a lateral parking space (05), in which a path (01) is calculated on the basis of the geometry of the parking space (05) and a vehicle position relative to this parking space (05), wherein a space (13; 14; 15) which is available on a side (09) lying opposite the parking space (05) is taken into account during the planning of the path, **characterized in that** the shortest distance (14) transversally with respect to the longitudinal direction (11) is taken into account when taking into account the space (14) which is available on the side lying opposite the parking space (05) during the planning of the path, wherein a differentiation is made between two path sections, a first path section outside a slewing range (12) of the vehicle (02) when travelling along the calculated path (01), and a second path section (19) within a slewing range (12) of the vehicle (02) when travelling along the calculated path (01).

2. Method according to Claim 1, **characterized in that** in addition to measuring the parking space (05) on a first side (08) of the vehicle (02), at the same time the space (13; 14; 15) which is available on a second side (09) of the vehicle (02) lying opposite the parking space (05) is measured and is taken into account in the calculation of the path (01).

3. Method according to Claim 1 or 2, **characterized in that** the path (01) comprises a first and a second path arc (03; 04), wherein the size of the first path arc (03) is calculated such that the space (13; 14; 15) which is available on the side lying opposite the parking space (05) satisfies at least lateral veering out (12) of the vehicle (02).

4. Method according to Claim 3, **characterized in that** the space (13; 14; 15) which is available on the side (09) lying opposite the parking space (05) is taken into account in the planning of the path, by the path (01) being calculated with a first path arc (03) and subsequently the space (12) which is required by the vehicle (02) when travelling along the path (01) being compared with the available space (13; 14; 15), wherein if the available space (13; 14; 15) is larger than or equal to the required spate (12), the path (01) remains uncharged, and if the available space (13; 14; 15) is smaller than the required space (12), the size of the first path arc (03) is increased until the required space (12) is equal to or smaller than the available space (13; 14; 15).

5. Method according to one of Claims 3 and 4, **characterized in that** the entire path (01) is shifted rearward in the longitudinal direction when viewed from the direction of travel of the vehicle (02), as a function of the increase in size of the first path arc (03).

6. Method according to Claim 5, **characterized in that** shifting of the path (01) rearward is dependent on the existing geometry of the parking space (05), in particular on the length thereof, wherein in the case of a short parking space (05) no shifting occurs or only a small degree of shifting occurs, and in the case of a long parking space (05) a relatively large degree of shifting occurs.

7. Method according to Claim 2, **characterized in that** when the available space (13; 14; 15) is determined, the space (13; 14; 15) which is actually available is reduced by a presettable value.

8. Method according to one of the preceding claims, **characterized in that** if the available space (13; 14; 15) is too small for a parking process, the parking space (05) is not offered for parking.

9. Method according to Claim 8, **characterized in that** the reason for not offering the parking space (05) is displayed to the driver.

10. Method according to one of Claims 1 to 9, **characterized in that** when the available space (15) is taken into account, the shortest distance between a boundary line (16) of the vehicle (02) when the calculated path (01) is being travelled along and an object (17) is taken into account, wherein the shortest distance which actually occurs between the vehicle (02) and the object (17) is taken into account in the form of an envelope curve around the boundary line (16).

11. Computer program product stored on a computer-useable medium, comprising computer-readable program means which, when the computer program product is executed on a microprocessor with associated storage means or on a computer, serve to prompt the latter to carry out a method according to one of Claims 1 to 10.

## Revendications

1. Procédé de planification de trajectoire lors du stationnement d'un véhicule (02) dans une place de stationnement latérale (05), dans lequel une trajectoire (01) est calculée à l'aide de la forme géométrique de la place de stationnement (05) et d'une position du véhicule par rapport à cette place de stationnement (05), un espace (13 ; 14 ; 15) disponible sur un côté opposé (09) à la place de stationnement (05) étant pris en compte lors de la planification de trajectoire, **caractérisé en ce que** lors de la planification de trajectoire, la distance la plus courte (14) transversalement à la direction longitudinale (11) est prise en compte lors de la prise en compte de l'espace (14) disponible sur le côté opposé à la place de stationnement (05), la distinction étant faite entre deux sections de trajectoire, une première section de trajectoire située à l'extérieur d'une zone de pivotement (12) du véhicule (02) en cas de sortie de la trajectoire (01) calculée et une deuxième section de trajectoire (19) située à l'intérieur d'une zone de pivotement (12) du véhicule (02) en cas de sortie de la trajectoire (01) calculée.

2. Procédé selon la revendication 1, **caractérisé en ce qu'**en sus d'une mesure de la place de stationnement (05) sur un premier côté (08) du véhicule (02), on réalise simultanément une mesure de l'espace disponible (13 ; 14 ; 15) sur un deuxième côté (09) du véhicule (02) opposé à la place de stationnement (05), ladite seconde mesure étant prise en compte lors du calcul de la trajectoire (01).

3. Procédé selon la revendication 1 ou 2, **caractérisé en ce que** la trajectoire (01) comprend un premier et un deuxième arc de trajectoire (03 ; 04), la taille du premier arc de trajectoire (03) étant choisie de telle sorte que l'espace (13 ; 14 ; 15) disponible sur le côté opposé à la place de stationnement (05) suffit au moins pour réaliser un déboîtage latéral (12) du véhicule (02).

4. Procédé selon la revendication 3, **caractérisé en ce que** l'espace (13 ; 14 ; 15) disponible sur le côté opposé (09) à la place de stationnement (05) est pris en compte lors de la planification de trajectoire, **en ce que** la trajectoire (01) est calculée avec un premier arc de trajectoire (03) puis que l'espace (12) nécessaire au véhicule (02) en cas de sortie de la trajectoire (01) est comparé à l'espace (13 ; 14 ; 15) disponible, la trajectoire (01) restant inchangée lorsque l'espace (13 ; 14 ; 15) disponible est supérieur ou égal à l'espace (12) nécessaire et la taille du premier arc de trajectoire (03) étant agrandie lorsque l'espace disponible (13 ; 14 ; 15) est inférieur à l'espace (12) nécessaire jusqu'à ce que l'espace (12) nécessaire soit inférieur ou égal à l'espace (13 ; 14 ; 15) disponible.

5. Procédé selon l'une quelconque des revendications 3 à 4, **caractérisé en ce que** l'ensemble de la trajectoire (01) est déplacé vers l'arrière dans la direction longitudinale vue depuis la direction de conduite du véhicule (02) en fonction de l'agrandissement du premier arc de trajectoire (03).

6. Procédé selon la revendication 5, **caractérisé en ce qu'**un déplacement de la trajectoire (01) vers l'arrière dépend de la forme géométrique réelle de la place de stationnement (05), notamment de sa longueur, un déplacement nul ou réduit se produisant en cas de place de stationnement (05) courte et un déplacement plus grand se produisant en cas de place de stationnement (05) longue.

7. Procédé selon la revendication 2, **caractérisé en ce que** l'espace (13 ; 14 ; 15) réellement disponible est amputé d'une valeur pouvant être préréglée lors d'un calcul de l'espace disponible (13 ; 14 ; 15).

8. Procédé selon l'une quelconque des revendications précédentes, **caractérisé en ce que** lorsque l'espace (13 ; 14 ; 15) disponible est trop réduit pour un processus de stationnement, la place de stationnement (05) n'est pas proposée au stationnement.

9. Procédé selon la revendication 8, **caractérisé en ce que** la raison pour laquelle la place de stationnement (05) n'est pas proposée est mentionnée au conducteur.

10. Procédé selon l'une quelconque des revendications 1 à 9, **caractérisé en ce que** la distance la plus courte entre une ligne limite (16) du véhicule (02) en cas de sortie de la trajectoire (01) calculée et un objet (17) est prise en compte lors de la prise en compte de l'espace disponible (15), la distance effectivement la plus courte entre le véhicule (02) et l'objet (17) étant prise en compte sous la forme d'une courbe d'enveloppe entourant la ligne limite (16).

11. Produit de programme informatique mémorisé sur un support utilisable par ordinateur, comprenant des moyens de programmation lisibles par ordinateur déclenchant ledit processeur lors de l'exécution du produit de programme informatique sur un microprocesseur doté de moyens de mise en mémoire associés ou sur un ordinateur, de façon à mettre en oeuvre un procédé selon l'une quelconque des revendications 1 à 10.
